# FASCICULE DE BREVET EUROPEEN

(11) **EP 3 146 157 B1**
(45) Date de publication et mention de la délivrance du brevet: **31.07.2019**
(21) Numéro de dépôt: 15724345.2
(22) Date de dépôt: 07.05.2015
(51) Int. Cl.: F01D 5/08, F01D 11/00

(54) **ROTOR DE TURBINE POUR UN MOTEUR À TURBINE À GAZ**
TURBINENROTOR FÜR EINEN GASTURBINENMOTOR
TURBINE ROTOR FOR A GAS-TURBINE ENGINE

(30) Priorité: 20.05.2014 FR 1454500
(43) Date de publication de la demande: 29.03.2017
(73) Titulaire: SAFRAN AIRCRAFT ENGINES, 75015 Paris (FR)
(72) Inventeur: SICARD, Josselin Luc Florent, F-77176 Savigny Le Temple (FR); PELLATON, Bertrand, F-77390 Verneuil l'Etang (FR); BARRET, Hélène Marie, F-75012 Paris (FR); SILET, Benoit Guillaume, F-91330 Yerres (FR); HOULET, Anne-Flore Karine, F-92160 Antony (FR)
(74) Mandataire: Cabinet Camus Lebkiri
(86) Numéro de dépôt international: PCT/FR2015/051211
(87) Numéro de publication internationale: WO 2015/177429

(56) Documents cités:
- EP-A1- 0 169 798
- EP-A1- 1 264 964
- EP-A2- 1 736 635
- DE-A1- 3 310 529
- DE-B- 1 106 557
- GB-A- 2 307 520
- US-A- 3 575 528

## Description

### DOMAINE TECHNIQUE DE L'INVENTION

L'invention se rapporte à un rotor de turbine pour un moteur à turbine à gaz, destiné à équiper des aéronefs, et plus particulièrement à un rotor de turbine basse ou moyenne pression.

### ETAT DE LA TECHNIQUE ANTERIEURE

Dans les turbomachines, il est courant d'utiliser de l'air prélevé notamment sur le compresseur à haute pression pour refroidir les pièces situées dans des zones thermiquement chaudes, en aval de la chambre de combustion de la turbomachine. Par exemple, le rotor de la turbine basse pression doit être ventilé par de l'air « frais » afin de refroidir les liaisons ou attaches des aubes sur les disques du rotor par une circulation d'air appropriée au niveau de la liaison entre le pied des aubes et la jante du disque.

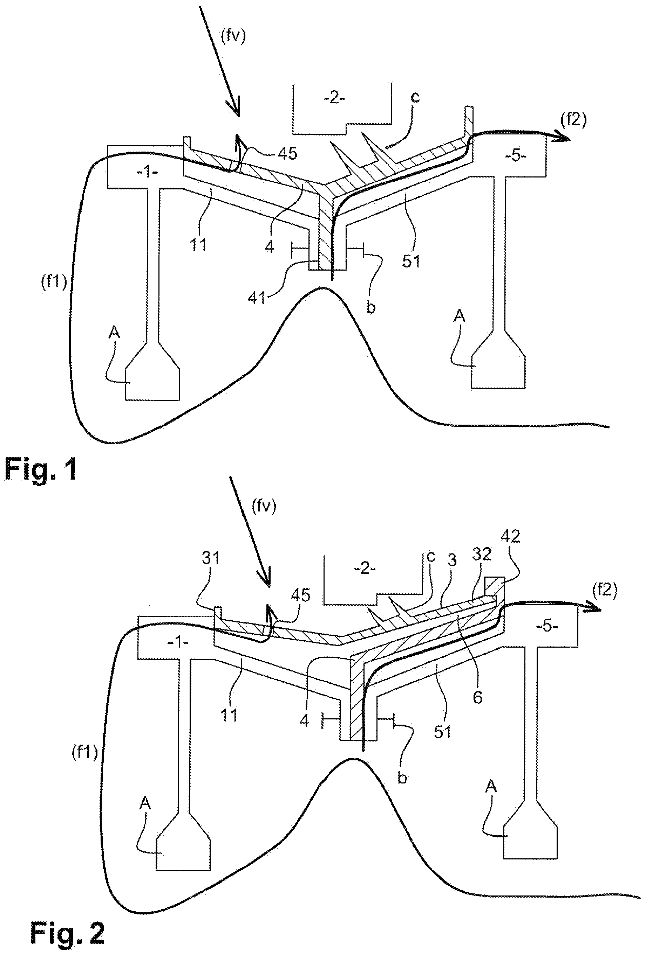

La figure 1 illustre de façon schématique un rotor de turbine de l'art antérieur comportant un disque amont 1, un disque aval 5, une bride annulaire b. Une première virole 11 relie le disque amont 1 à la bride annulaire b. Une deuxième virole 51 relie le disque aval 5 à la bride annulaire b. Le rotor comporte également un dispositif séparateur de flux 4 dont une deuxième portion 41 est disposée entre la première virole 11 et la deuxième virole 51. Ces trois éléments : portion 41, première virole 11 et deuxième virole 51 sont maintenus ensemble par la bride annulaire b. Le dispositif séparateur de flux est dit anneau labyrinthe, du fait de sa forme annulaire à 360°C et de la présence de léchettes c. Les léchettes c de l'anneau labyrinthe 4 permettent d'assurer l'étanchéité entre des zones de la turbine sous des pressions différentes. Elles sont situées en vis-à-vis de cartouches en matériaux abradable sur la partie statorique. Ces cartouches permettent d'éviter la destruction des léchettes lorsqu'elles entrent en contact avec le stator.

Le dispositif séparateur de flux 4 dans ce rotor a une forme en Y afin de protéger les viroles des disques et canaliser les flux d'air qui refroidissent les disques. Trois flux thermiques f1, f2 et fv cohabitent au sein de l'agencement rotorique : un premier flux f1 pour la ventilation du disque amont, un deuxième flux f2 pour la ventilation du disque aval et un flux de veine fv provenant d'une veine d'air de la turbine.

Le premier flux de ventilation f1, afin de refroidir le disque amont, passe (dans le sens de la flèche) au travers du disque amont par des alvéoles pratiquées dans le disque amont 1 puis par au moins un trou 45 pratiqué dans le dispositif séparateur de flux 4.

Le deuxième flux de ventilation f2, afin de refroidir le disque aval, passe (dans le sens de la flèche) au travers d'une pluralité de lunules (non visibles sur la figure 1) du dispositif séparateur de flux 4 et au travers du disque aval par des alvéoles pratiquées dans le disque aval 5.

Le dispositif de la figure 1 présente comme inconvénient majeur la présence de gradients thermiques au niveau de la bride annulaire du fait de la cohabitation entre les différents flux d'air ayant des températures différentes. La bride annulaire maintient ensemble la virole du disque amont 11, la virole du disque aval 51 et le dispositif séparateur de flux 4. Les gradients thermiques induisent des contraintes mécaniques sur la bride annulaire. Ces contraintes mécaniques peuvent induire une détérioration voire une rupture de la bride annulaire. DE1106557,EP1736635 divulguent un rotor de turbine comportant un dispositif séparateur de flux d'air, selon le préambule de la revendication 1.

### EXPOSE DE L'INVENTION

L'invention vise à remédier à tout ou partie des inconvénients de l'état de la technique identifiés ci-dessus, et notamment à proposer des moyens permettant de diminuer les contraintes mécaniques au niveau de la bride annulaire reliant un disque de turbine amont et un disque de turbine aval d'un rotor de turbine.

Dans ce dessein, un aspect de l'invention se rapporte à un rotor de turbine pour un moteur à turbine à gaz, ledit rotor comportant :
- un disque de turbine amont ;
- un disque de turbine aval ;
- une bride annulaire ;
- une première virole reliant le disque de turbine amont à la bride annulaire ;
- une deuxième virole reliant le disque de turbine aval à la bride annulaire ;
- un dispositif séparateur de flux d'air comportant :
   - une première partie, formant un premier anneau, disposée entre le disque de turbine amont et le disque de turbine aval ;
   - une deuxième partie, formant un deuxième anneau, la dite deuxième partie ayant une première portion disposée en regard du disque de turbine aval et une deuxième portion disposée entre la première virole et la deuxième virole ; et
   - une zone d'isolation thermique disposée entre la première partie et la deuxième partie.

Du fait de cet agencement, les flux de ventilation d'air entre la partie amont et la partie aval sont dissociés. En effet, la zone d'isolation thermique ainsi que la première partie et la deuxième partie forment une frontière physique entre le flux de ventilation pour le refroidissement du disque amont et le flux de ventilation pour le refroidissement du disque aval. Grâce à la dissociation des flux de ventilation d'air, le gradient thermique au niveau de la bride est diminué voire supprimé et ainsi les contraintes mécaniques au niveau de la bride sont diminuées voire supprimées. La présence de la zone d'isolation thermique permet de ne plus relier directement, c'est-à-dire par de la matière, les zones en contact avec un flux d'air froid et un flux d'air chaud afin de diminuer les contraintes mécaniques dues aux gradients thermiques.

Outre les caractéristiques principales qui viennent d'être mentionnées dans le paragraphe précédent, le rotor selon l'invention peut présenter une ou plusieurs caractéristiques complémentaires parmi les suivantes, considérées individuellement ou selon les combinaisons techniquement possibles :
- la zone d'isolation thermique est un espace rempli d'air ;
- la zone d'isolation thermique est disposée entre une partie inférieure de la première partie et une partie supérieure de la deuxième partie et est en regard de la deuxième virole ;
- la première partie du dispositif séparateur de flux et la deuxième partie du dispositif séparateur de flux sont d'un seul tenant ;
- la première partie du dispositif séparateur de flux et la deuxième partie du dispositif séparateur de flux sont des pièces distinctes ;
- la première partie du dispositif séparateur de flux est un joint labyrinthe, ledit joint labyrinthe comportant au moins une léchette ;
- une troisième portion de la première partie est en appui contre le disque amont, une quatrième portion de la première partie est en appui contre la première portion de la deuxième partie, ladite première portion étant configurée pour maintenir radialement la première partie. La première partie est ainsi maintenue en appui entre le disque amont et la deuxième partie, cette dernière étant elle-même maintenue en appui contre le disque aval et par la bride annulaire ;
- la bride annulaire maintient entre eux la première virole, la deuxième virole et la deuxième partie du dispositif séparateur de flux.

L'invention se rapporte également à une turbomachine comportant un rotor selon l'un des modes de réalisation précédemment décrit.

L'invention se rapporte également à un aéronef comportant un rotor selon l'un des modes de réalisation précédemment décrit.

### BREVE DESCRIPTION DES FIGURES

D'autres caractéristiques et avantages de l'invention ressortiront à la lecture de la description qui suit, en référence aux figures annexées, qui illustrent :
- la figure 1, une vue schématique en coupe d'un rotor de turbine pour un moteur à turbine à gaz selon l'art antérieur ;
- la figure 2, une vue schématique en coupe d'un rotor de turbine pour un moteur à turbine à gaz selon un mode de réalisation de l'invention.

Pour plus de clarté, les éléments identiques ou similaires sont repérés par des signes de référence identiques sur l'ensemble des figures.

### DESCRIPTION DETAILLEE D'UN MODE DE REALISATION

A la figure 2 est illustrée de façon schématique une vue en coupe d'un rotor de turbine pour un moteur à turbine à gaz d'un aéronef, et plus particulièrement un rotor d'une turbine basse pression. Le rotor comporte un disque de turbine amont 1, ainsi qu'un disque de turbine aval 5. Le disque de turbine amont 1 fait partie, par exemple, du premier étage de la turbine basse pression et le disque de turbine aval 5 fait partie du deuxième étage de la turbine basse pression.

Le rotor comporte également une première virole 11 et une deuxième virole 51. La première virole 11 et la deuxième virole 51 sont des viroles cylindriques. La première virole 11 relie le disque amont 1 à une bride annulaire b. La deuxième virole 51 relie le disque aval 1 à une bride annulaire b. La bride annulaire b permet de maintenir en liaison la première virole 11 et la deuxième virole 51.

Le rotor comporte également un dispositif séparateur de flux d'air (3, 4). Ce dispositif a pour fonction de permettre la séparation des flux d'air circulant dans le rotor, à savoir un premier flux f1 (sens de circulation illustré par une flèche sur la figure 2) qui sert à la ventilation du disque amont 1 et un deuxième flux f2 (sens de circulation illustré par une flèche sur la figure 2) qui sert à la ventilation du disque aval 5.

Le dispositif séparateur de flux comporte une première partie 3 et une deuxième partie 4. Dans cet exemple de réalisation, la première partie 3 et la deuxième partie 4 sont des pièces distinctes. La première partie 3 formant un premier anneau 3 est disposée entre le disque de turbine amont 1 et le disque de turbine aval 5. La première partie, dans cet exemple de réalisation est un joint labyrinthe et comporte au moins une léchette c. La léchette c, lors du fonctionnement de la turbine, entre en contact avec un matériau abradable d'une cartouche 2 du stator de la turbine. La deuxième partie 4, formant un deuxième anneau est disposée entre le disque de turbine aval 5 et les première 11 et deuxième virole 51. La deuxième partie 4 comporte une première portion 42 disposée en regard du disque de turbine aval 5. La première portion 42 est ici en appui contre le disque de turbine aval 5. La deuxième partie 4 comporte une deuxième portion disposée entre la première virole 11 et la deuxième virole 51 et maintenue en position par la bride annulaire b. Le dispositif séparateur de flux comporte également une zone d'isolation thermique 6 entre la première partie 3 et la deuxième partie 4. Dans cet exemple de réalisation, la zone d'isolation thermique 6 est un espace rempli d'air entre les deux pièces distinctes que sont le premier anneau 3 et le deuxième anneau 4. La zone d'isolation thermique 6 est située entre une partie inférieure du premier anneau 3 et une partie supérieure du deuxième anneau 4. Elle est en regard au moins de la deuxième virole 51 qui relie le disque de turbine aval 5 à la bride annulaire b. Dans cet exemple de réalisation, elle est en regard à la fois de la deuxième virole 51 et de la première virole 11, la zone d'isolation thermique 6 est un espace rempli d'air isolant la bride annulaire du premier flux de ventilation f1 et du deuxième flux de ventilation f2.

Pour ce qui est du positionnement de la première partie 3, une troisième portion 31 de la première partie est en appui contre le disque de turbine amont 1 et une quatrième portion 32 de la première partie est en appui contre la première portion 42 de la deuxième partie. La première portion 42 de la deuxième partie maintient radialement la première partie 3. Dans cet exemple de réalisation, la première portion 42 forme un crochet dans lequel vient s'insérer la quatrième portion 32 de la première partie.

Le rotor comporte un premier agencement de ventilation comportant une pluralité d'alvéoles (non visibles) du disque amont 1 et au moins un trou 45 d'une paroi de la première partie du dispositif séparateur de flux. Le premier agencement de ventilation permet la circulation du premier flux de ventilation f1 pour la ventilation du disque amont. Le premier flux de ventilation f1 rencontre le flux de veine fv en provenance d'une veine d'air à sa sortie du trou 45 pratiqué dans la paroi de la première partie du dispositif séparateur de flux. Le rotor comporte également un deuxième agencement de ventilation comportant une pluralité de lunules (non visibles) pratiquées dans la deuxième partie du dispositif séparateur de flux de façon à faire circuler un deuxième flux de ventilation f2 entre la première virole et la deuxième virole vers un espace compris entre la deuxième partie 4 du dispositif séparateur de flux et la deuxième virole 51. Le deuxième agencement de ventilation comporte également une pluralité d'alvéoles pratiquées dans le disque aval 5. Le deuxième agencement de ventilation permet la circulation du deuxième flux de ventilation f2 pour la ventilation du disque aval.

L'invention n'est pas limitée aux modes de réalisation précédemment décrits en référence aux figures et des variantes pourraient être envisagées sans sortir du cadre de l'invention.

## Revendications

1. Rotor de turbine pour un moteur à turbine à gaz, ledit rotor comportant :
- un disque de turbine amont (1) ;
- un disque de turbine aval (5) ;
- une bride annulaire (b) ;
- une première virole (11) reliant le disque de turbine amont à la bride annulaire ;
- une deuxième virole (51) reliant le disque de turbine aval à la bride annulaire ;
- un dispositif séparateur de flux d'air ;
**caractérisé en ce que** le dispositif séparateur de flux d'air comporte :
- une première partie (3), formant un premier anneau, disposée entre le disque de turbine amont et le disque de turbine aval ;
- une deuxième partie (4), formant un deuxième anneau, la dite deuxième partie ayant une première portion disposée en regard du disque de turbine aval et une deuxième portion disposée entre la première virole et la deuxième virole ; et
- une zone d'isolation thermique (6) disposée entre la première partie et la deuxième partie.

2. Rotor selon la revendication 1 **caractérisé en ce que** la zone d'isolation thermique est un espace rempli d'air.

3. Rotor selon l'une quelconque des revendications 1 ou 2 **caractérisé en ce que** la zone d'isolation thermique est disposée entre une partie inférieure de la première partie et une partie supérieure de la deuxième partie et est en regard de la deuxième virole.

4. Rotor selon l'une quelconque des revendications précédentes **caractérisé en ce que** la première partie du dispositif séparateur de flux et la deuxième partie du dispositif séparateur de flux sont d'un seul tenant.

5. Rotor selon l'une quelconque des revendications 1 à 4 **caractérisé en ce que** la première partie du dispositif séparateur de flux et la deuxième partie du dispositif séparateur de flux sont des pièces distinctes.

6. Rotor selon la revendication précédente **caractérisé en ce que** la première partie du dispositif séparateur de flux est un joint labyrinthe, ledit joint labyrinthe comportant au moins une léchette.

7. Rotor selon l'une quelconque des revendications 6 ou 7 **caractérisé en ce qu'**une première portion de la première partie est en appui contre le disque amont, une deuxième portion de la première partie est en appui contre la première portion de la deuxième partie, ladite première portion de la deuxième partie étant configurée pour maintenir radialement la première partie.

8. Rotor selon l'une quelconque des revendications précédentes **caractérisé en ce que** la bride annulaire maintient en liaison la première virole, la deuxième virole et la deuxième partie du dispositif séparateur de flux.

9. Turbomachine **caractérisé en ce qu'**elle comporte un rotor selon l'une quelconque des revendications précédentes.

10. Aéronef **caractérisé en ce qu'**il comporte un rotor selon l'une quelconque des revendications 1 à 8.

## Patentansprüche

1. Turbinenrotor für einen Motor mit Gasturbine, wobei der genannte Rotor umfasst:
- eine vorgeschaltete Turbinenscheibe (1);
- eine nachgeschaltete Turbinenscheibe (5);
- einen ringförmigen Flansch (b);
- eine erste Zwinge (11), die die vorgeschaltete Turbinenscheibe mit dem ringförmigen Flansch verbindet;
- eine zweite Zwinge (51), die die nachgeschaltete Turbinenscheibe mit dem ringförmigen Flansch verbindet;
- eine Trennvorrichtung des Luftstroms;
**dadurch gekennzeichnet, dass** die Trennvorrichtung des Luftstroms umfasst:
- einen ersten Teil (3), der einen ersten Ring bildet, der zwischen der vorgeschalteten Turbinenscheibe und der nachgeschalteten Turbinenscheibe angeordnet ist;
- einen zweiten Teil (4), der einen zweiten Ring bildet, wobei der genannte zweite Teil einen ersten Abschnitt hat, der gegenüber der nachgeschalteten Turbinenscheibe angeordnet ist, und einen zweiten Abschnitt, der zwischen der ersten Zwinge und der zweiten Zwinge angeordnet ist; und
- einen thermischen Dämmbereich (6), der zwischen dem ersten Teil und dem zweiten Teil angeordnet ist.

2. Rotor gemäß Anspruch 1, **dadurch gekennzeichnet, dass** der thermische Dämmbereich ein mit Luft gefüllter Raum ist.

3. Rotor gemäß irgendeinem der Ansprüche 1 oder 2, **dadurch gekennzeichnet, dass** der thermische Isolationsbereich zwischen einem unteren Teil des ersten Teils und einem oberen Teil des zweiten Teils angeordnet ist und gegenüber der zweiten Zwinge ist.

4. Rotor gemäß irgendeinem der voranstehenden Ansprüche, **dadurch gekennzeichnet, dass** der erste Teil der Trennvorrichtung des Flusses und der zweite Teil der Trennvorrichtung des Flusses aus einem Stück bestehen.

5. Rotor gemäß irgendeinem der Ansprüche 1 bis 4, **dadurch gekennzeichnet, dass** der erste Teil der Trennvorrichtung des Flusses und der zweite Teil der Trennvorrichtung des Flusses unterschiedliche Stücke sind.

6. Rotor gemäß dem voranstehenden Anspruch, **dadurch gekennzeichnet, dass** der erste Teil der Trennvorrichtung des Flusses eine Labyrinthdichtung ist, wobei die genannte Labyrinthdichtung wenigstens eine Dichtlippe umfasst.

7. Rotor gemäß irgendeinem der Ansprüche 6 oder 7, **dadurch gekennzeichnet, dass** ein erster Abschnitt des ersten Teils sich gegen die vorgeschaltete Scheibe aufstützt, ein zweiter Abschnitt des ersten Teils sich gegen den ersten Abschnitt des zweiten Teils aufstützt, wobei der genannte erste Abschnitt des zweiten Teils konfiguriert ist, um den ersten Teil radial zu halten.

8. Rotor gemäß irgendeinem der voranstehenden Ansprüche, **dadurch gekennzeichnet, dass** der ringförmige Flansch die erste Zwinge, die zweite Zwinge und den zweiten Teil der Trennvorrichtung des Flusses in Verbindung hält.

9. Turbomaschine, **dadurch gekennzeichnet, dass** sie einen Rotor gemäß irgendeinem der voranstehenden Ansprüche umfasst.

10. Luftfahrzeug, **dadurch gekennzeichnet, dass** es einen Rotor gemäß irgendeinem der Ansprüche 1 bis 8 umfasst.

## Claims

1. Turbine rotor for a gas turbine engine, wherein said rotor includes:
▪ an upstream turbine disk (1);
▪ a downstream turbine disk (5);
▪ an annular flange (b);
▪ a first ferrule (11) connecting the upstream turbine disk to the annular flange;
▪ a second ferrule (51) connecting the downstream turbine disk to the annular flange;
▪ an air flow separator device;
**characterised in that** the air flow separator device includes:
• a first part (3), forming a first ring, arranged between the upstream turbine disk and the downstream turbine disk;
• a second part (4), forming a second ring, said second part having a first portion facing the downstream turbine disk, and a second portion arranged between the first ferrule and the second ferrule; and
• a thermal insulation area (6) arranged between the first part and the second part.

2. Rotor according to claim 1, **characterised in that** the thermal insulation area is a space filled with air.

3. Rotor according to any of claims 1 or 2, **characterised in that** the thermal insulation area is arranged between a lower part of the first part and an upper part of the second part, and is facing the second ferrule.

4. Rotor according to any of the previous claims, **characterised in that** the first part of the flow separator device and the second part of the flow separator device are a single piece.

5. Rotor according to any of claims 1 to 4, **characterised in that** the first part of the flow separator device and the second part of the flow separator device are separate pieces.

6. Rotor according to the previous claim, **characterised in that** the first part of the flow separator device is a labyrinth seal, where the said labyrinth seal including at least one lip.

7. Rotor according to any of claims 6 or 7, **characterised in that** a first portion of the first part is supported against the upstream disk, a second portion of the first part is supported against the first portion of the second part, said first portion of the second part being configured to hold the first part radially.

8. Rotor according to any of the previous claims, **characterised in that** the annular flange maintains connection between the first ferrule, the second ferrule and the second part of the flow separator device.

9. Turbomachine, **characterised in that** it includes a rotor according to any of the previous claims.

10. Aircraft, **characterised in that** it includes a rotor according to any of claims 1 to 8.
